# EUROPEAN PATENT APPLICATION

(11) **EP 4 468 804 A1**
(43) Date of publication of application: **27.11.2024**
(21) Application number: 23759193.8
(22) Date of filing: 22.02.2023
(51) Int. Cl.: H04W 72/04

(54) **COMMUNICATION METHOD AND APPARATUS, AND SYSTEM AND STORAGE MEDIUM**

(30) Priority: 24.02.2022 CN 202210173890
(71) Applicant: Huawei Technologies Co., Ltd., Shenzhen, Guangdong 518129 (CN)
(72) Inventor: LI, Zhi, Shenzhen, Guangdong 518129 (CN)
(74) Representative: MERH-IP Matias Erny Reichl Hoffmann Patentanwälte PartG mbB
(86) International application number: PCT/CN2023/077575
(87) International publication number: WO 2023/160568

(57) **Abstract**

This application discloses a communication method, apparatus, and system, and a storage medium, and belongs to the communication field. The method includes: A radio unit sends a service idleness request to a baseband unit; and the radio unit receives a service idleness allow response sent by the baseband unit, where the service idleness allow response indicates that a first resource is an idle resource. In this application, a requirement of the radio unit for autonomously using a resource can be met.

## Description

This application claims priority to Chinese Patent Application No. 202210173890.0, filed with on February 24, 2022 and entitled "COMMUNICATION METHOD, APPARATUS, AND SYSTEM, AND STORAGE MEDIUM", which is incorporated herein by reference in its entirety.

### TECHNICAL FIELD

This application relates to the communication field, and in particular, to a communication method, apparatus, and system, and a storage medium.

### BACKGROUND

A base station includes a baseband unit and a radio unit. The baseband unit performs baseband processing, interaction with a core network, and other functions. The radio unit performs signal modulation, radio frequency sending, and other functions. The baseband unit may further schedule the radio unit for transmission of an air interface service, and periodically or aperiodically execute a component processing task on the radio unit. The component processing task includes a task for calibrating a radio frequency channel of the radio unit, a task for detecting a status of a component in the radio unit, and/or the like.

Currently, the baseband unit may allocate a resource, and perform transmission of an air interface service between the baseband unit and the radio unit using the allocated resource. Alternatively, the baseband unit may actively suspend transmission of the air interface service with the radio unit, and executes a component processing task on the radio unit using a resource that is idle during the suspension of the air interface service. For example, the baseband unit calibrates a radio frequency channel of the radio unit and/or detects a component in the radio unit.

With development of technologies, autonomy of the radio unit is increasingly high, and the radio unit may have a requirement for autonomously using a resource. For example, the radio unit may need a resource for autonomously executing the component processing task, or the radio unit may need a resource for power saving, fault recovery, or the like. However, currently, the requirement of the radio unit for autonomously using a resource cannot be met.

### SUMMARY

This application provides a communication method, apparatus, and system, and a storage medium, to meet a requirement of a radio unit for autonomously using a resource. The technical solutions are as follows:

According to a first aspect, this application provides a communication method. In the method, a radio unit sends a service idleness request to a baseband unit. The radio unit receives a service idleness allow response sent by the baseband unit, where the service idleness allow response indicates that a first resource is an idle resource. Alternatively, the radio unit receives a service idleness rejection response sent by the baseband unit, where the service idleness rejection response includes delay duration, and resends the service idleness request to the baseband unit after a first moment, where the first moment is after a second moment and duration between the first moment and the second moment is greater than or equal to the delay duration, and the second moment is a moment at which the radio unit receives the service idleness rejection response.

The radio unit sends the service idleness request to the baseband unit. When allowing a service to be idle, the baseband unit sends the service idleness allow response to the radio unit, where the service idleness allow response indicates that the first resource is the idle resource. In this way, after the radio unit receives the service idleness allow response, both the baseband unit and the radio unit know that the first resource is the idle resource. The baseband unit may stop transmitting the first service using the first resource, where the first service is a service of the radio unit, and the radio unit may autonomously use the first resource. In this way, interfering with the first service is avoided when the radio unit autonomously uses the first resource. For example, the radio unit autonomously executes a component processing task using the first resource. This meets a requirement of the radio unit for autonomously executing the component processing task, and avoids interfering with the first service when executing the component processing task.

Alternatively, when rejecting a service to be idle, the baseband unit sends a service idleness rejection response to the radio unit. Because the service idleness rejection response includes delay duration, the radio unit resends the service idleness request after delaying for a period of time starting from the second moment at which the service idleness rejection response is received. Duration of the period of time is greater than or equal to the delay duration, to prevent the radio unit from frequently sending the service idleness request to the baseband unit.

In a possible implementation, the radio unit executes a first component processing task using the first resource, where the first component processing task includes one or more of the following: a task for calibrating a radio frequency channel of the radio unit, a task for calibrating an antenna of the radio unit, or a task for detecting a component in the radio unit. Because the baseband unit stops transmitting the first service using the first resource, the radio unit executes the first component processing task using the first resource, so as to avoid interfering with the first service.

In another possible implementation, the service idleness rejection response further includes a rejection reason of the baseband unit. When the rejection reason is not that the baseband unit has no service idleness function, the radio unit resends the service idleness request to the baseband unit after the first moment. In this way, when the baseband unit does not have the function, the radio unit repeatedly sends the service idleness request, to avoid a waste of a network resource.

In another possible implementation, the first resource includes a first radio frequency channel, a first time resource, and a first frequency resource, and the first radio frequency channel is a radio frequency channel on the radio unit.

In another possible implementation, the service idleness allow response includes first information, and the first information indicates the first resource. In this way, the radio unit obtains the first resource based on the first information, so as to ensure that the first resource obtained by the radio unit is consistent with the first resource determined by the baseband unit, and ensure that the baseband unit does not transmit the first service using the first resource when the radio unit uses the first resource.

In another possible implementation, the first information includes one or more of the following information:
a channel identifier of the first radio frequency channel, a start time of the first time resource, duration of the first time resource, a start location of the first frequency resource, or a resource size of the first frequency resource.

In another possible implementation, the first information includes one or more of the following information:
a channel identifier of the first radio frequency channel, a start time of the first time resource, duration of the first time resource, or an identifier of at least one frequency in the first frequency resource.

In another possible implementation, before the radio unit executes a first component processing task using the first resource, the radio unit determines the first resource based on the first information.

In another possible implementation, the service idleness request includes second information and/or a task identifier of the first component processing task, the second information indicates a second resource, and the first component processing task includes one or more of the following: the task for calibrating the radio frequency channel of the radio unit, the task for calibrating the antenna of the radio unit, or the task for detecting the component in the radio unit. Because the service idleness request includes the second information and/or the task identifier of the first component processing task, the baseband unit may determine, based on the second information and/or the task identifier of the first component processing task, a resource required by the radio unit to execute the first component processing task, to avoid excessive or insufficient resources determined by the baseband unit.

In another possible implementation, the second resource includes the first radio frequency channel, a second time resource, and a second frequency resource, and the first radio frequency channel is a radio frequency channel on the radio unit.

In another possible implementation, the second information includes one or more of the following information:
the channel identifier of the first radio frequency channel, a start time of the second time resource, duration of the second time resource, a start location of the second frequency resource, or a resource size of the second frequency resource.

In another possible implementation, the second information includes one or more of the following information:
the channel identifier of the first radio frequency channel, a start time of the second time resource, duration of the second time resource, or an identifier of at least one frequency in the second frequency resource.

In another possible implementation, the radio unit determines the second information based on the first component processing task. The second information may indicate a resource required by the radio unit to execute the first component processing task, so as to avoid excessive or insufficient resources determined by the baseband unit.

In another possible implementation, the radio unit sends the task identifier of the first component processing task and the second information to the baseband unit. In this way, the baseband unit knows, via the second information, specific resources required by the radio unit to process the first component processing task. In this way, when the radio unit sends a service idleness request, the service idleness request includes the task identifier of the first component processing task, and the baseband unit determines, based on the task identifier, the first resource required by the radio unit.

According to a second aspect, this application provides a communication method. In the method, a baseband unit receives a service idleness request sent by a radio unit. When allowing a service to be idle, the baseband unit determines a first resource based on the service idleness request, and sends a service idleness allow response to the radio unit, where the service idleness allow response indicates that the first resource is an idle resource. The baseband unit sends a service idleness rejection response to the radio unit when rejecting a service to be idle, where the service idleness rejection response includes the delay duration.

The baseband unit determines the first resource after receiving the service idleness request, and when allowing a service to be idle, sends a service idleness allow response to the radio unit, where the service idleness allow response indicates that the first resource is an idle resource. In this way, after the radio unit receives the service idleness allow response, both the baseband unit and the radio unit know that the first resource is the idle resource. The baseband unit may stop transmitting the first service using the first resource, where the first service is a service of the radio unit, and the radio unit may autonomously use the first resource. In this way, interfering with the first service is avoided when the radio unit autonomously uses the first resource. For example, the radio unit autonomously executes a component processing task using the first resource. This meets a requirement of the radio unit for autonomously executing the component processing task, and avoids interfering with the first service when executing the component processing task.

Alternatively, when rejecting a service to be idle, the baseband unit sends a service idleness rejection response to the radio unit. Because the service idleness rejection response includes delay duration, after receiving the service idleness rejection response, the radio unit resends the service idleness request after delaying for a period of time. Duration of the period of time is greater than or equal to the delay duration, to prevent the radio unit from frequently sending the service idleness request to the baseband unit.

In a possible implementation, the first resource includes a first radio frequency channel, a first time resource, and a first frequency resource, and the first radio frequency channel is a radio frequency channel on the radio unit.

In another possible implementation, the service idleness allow response includes first information, and the first information indicates the first resource. In this way, it is ensured that the first resource known by the radio unit is consistent with the first resource of the baseband unit, and it is ensured that the baseband unit does not transmit the first service using the first resource when the radio unit uses the first resource.

In another possible implementation, the first information includes one or more of the following information:
a channel identifier of the first radio frequency channel, a start time of the first time resource, duration of the first time resource, a start location of the first frequency resource, or a resource size of the first frequency resource.

In another possible implementation, the first information includes one or more of the following information:
a channel identifier of the first radio frequency channel, a start time of the first time resource, duration of the first time resource, or an identifier of at least one frequency in the first frequency resource.

In another possible implementation, the baseband unit stops, in the period of time corresponding to the first time resource, transmitting a first service using the first frequency resource, where the first service is a service of the radio unit. This prevents the radio unit from interfering with the first service in the period of time.

In another possible implementation, the service idleness rejection response further includes a rejection reason of the baseband unit, and the radio unit resends the service idleness request to the baseband unit only when the rejection reason is not that the baseband unit has no service idleness function. In this way, when the baseband unit does not have the function, the radio unit repeatedly sends the service idleness request, to avoid a waste of a network resource.

In another possible implementation, the service idleness request includes second information and/or a task identifier of the first component processing task, the second information indicates a second resource, and the first component processing task includes one or more of the following: the task for calibrating the radio frequency channel of the radio unit, the task for calibrating the antenna of the radio unit, or the task for detecting the component in the radio unit. Because the service idleness request includes the second information and/or the task identifier of the first component processing task, the baseband unit may determine, based on the second information and/or the task identifier of the first component processing task, a resource required by the radio unit to execute the first component processing task, to avoid excessive or insufficient resources determined by the baseband unit.

In another possible implementation, the second resource includes the first radio frequency channel, a second time resource, and a second frequency resource, and the first radio frequency channel is a radio frequency channel on the radio unit.

In another possible implementation, the second information includes one or more of the following information:
the channel identifier of the first radio frequency channel, a start time of the second time resource, duration of the second time resource, a start location of the second frequency resource, or a resource size of the second frequency resource.

In another possible implementation, the second information includes one or more of the following information:
the channel identifier of the first radio frequency channel, a start time of the second time resource, duration of the second time resource, or an identifier of at least one frequency in the second frequency resource.

In another possible implementation, the baseband unit determines, based on service information of the first service, whether transmission of the first service can be suspended, where the first service is a service of the radio unit. When determining that transmission of the first service can be suspended, that is, the service is allowed to be idle, the baseband unit determines the first resource based on the service idleness request. The first resource is determined only when the first service is allowed to be idle. This reduces impact on the first service.

In another possible implementation, the service idleness request includes the second information. The baseband unit determines, based on the second information, the second resource as the first resource; or the baseband unit allocates, based on the second information, a resource different from the second resource as the first resource. Because the service idleness request includes the second information, the baseband unit may determine, based on the second information, a resource required by the radio unit to execute the first component processing task, to avoid excessive or insufficient resources determined by the baseband unit.

In another possible implementation, the service idleness request includes the task identifier of the first component processing task. The baseband unit obtains corresponding information from a correspondence between the task identifier and the second information based on the task identifier of the first component processing task. The baseband unit determines the first resource based on the obtained information. Because the service idleness request includes the task identifier of the first component processing task, the baseband unit may determine, based on the task identifier of the first component processing task, a resource required by the radio unit to execute the first component processing task, to avoid excessive or insufficient resources determined by the baseband unit.

In another possible implementation, the baseband unit receives the task identifier of the first component processing task and the second information that are sent by the radio unit. The baseband unit stores the correspondence between the task identifier of the first component processing task and the second information. In this way, the baseband unit knows, via the second information, specific resources required by the radio unit to process the first component processing task. In this way, when the service idleness request includes the task identifier of the first component processing task, the baseband unit determines, based on the task identifier, the first resource required by the radio unit.

According to a third aspect, this application provides a communication apparatus, configured to perform the method according to any one of the first aspect or the possible implementations of the first aspect. Specifically, the apparatus includes units configured to perform the method according to any one of the first aspect or the possible implementations of the first aspect.

According to a fourth aspect, this application provides a communication apparatus, configured to perform the method according to any one of the second aspect or the possible implementations of the second aspect. Specifically, the apparatus includes units configured to perform the method according to any one of the second aspect or the possible implementations of the second aspect.

According to a fifth aspect, this application provides a communication apparatus, including at least one processor and a memory. The at least one processor is configured to: be coupled to the memory, and read and execute instructions in the memory, to implement the method according to any one of the first aspect or the possible implementations of the first aspect.

According to a sixth aspect, this application provides a communication apparatus, including at least one processor and a memory. The at least one processor is configured to: be coupled to the memory, and read and execute instructions in the memory, to implement the method according to any one of the second aspect or the possible implementations of the second aspect.

According to a seventh aspect, this application provides a computer program product. The computer program product includes a computer program stored in a computer-readable storage medium, and the computer program is loaded by a processor to implement the method according to any one of the first aspect, the second aspect, the possible implementations in the first aspect, or the possible implementations in the second aspect.

According to an eighth aspect, this application provides a computer-readable storage medium, configured to store a computer program, where the computer program is loaded by a processor to perform the method according to any one of the first aspect, the second aspect, the possible implementations in the first aspect, or the possible implementations in the second aspect.

According to a ninth aspect, this application provides a communication system, where the system includes the apparatus according to the third aspect and the apparatus according to the fourth aspect, or the system includes the apparatus according to the fifth aspect and the apparatus according to the sixth aspect.

### BRIEF DESCRIPTION OF DRAWINGS

FIG. 1 is a diagram of a network architecture according to an embodiment of this application;
FIG. 2 is a diagram of a structure of a radio unit according to an embodiment of this application;
FIG. 3 is a flowchart of a communication method according to an embodiment of this application;
FIG. 4 is a diagram of a structure of a communication apparatus according to an embodiment of this application;
FIG. 5 is a diagram of a structure of another communication apparatus according to an embodiment of this application;
FIG. 6 is a diagram of a structure of another communication apparatus according to an embodiment of this application;
FIG. 7 is a diagram of a structure of another communication apparatus according to an embodiment of this application; and
FIG. 8 is a diagram of a structure of a communication system according to an embodiment of this application.

### DESCRIPTION OF EMBODIMENTS

The following further describes in detail embodiments of this application with reference to accompanying drawings.

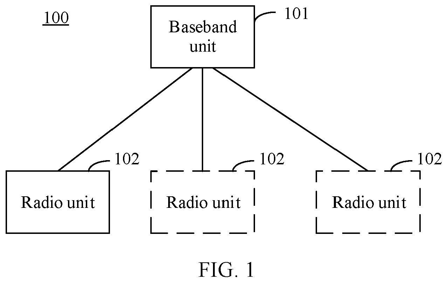

Refer to FIG. 1. An embodiment of this application provides a network architecture 100. The network architecture 100 includes:
a baseband unit (baseband unit, BBU) 101 and a radio unit (radio unit, RU) 102, where the baseband unit 101 communicates with the radio unit 102.

In some embodiments, the baseband unit 101 has functions such as baseband processing and interaction with a core network. The radio unit 102 has functions such as signal modulation and radio frequency sending. In this way, the baseband unit 101 and the radio unit 102 may be configured for service transmission. For example, the baseband unit 101 may receive service data sent from the core network, perform baseband processing on the received service data, so as to convert the service data into a baseband signal, and send the baseband signal to the radio unit 102. The radio unit 102 receives the baseband signal, converts the baseband signal into a radio frequency signal, and sends the radio frequency signal to a terminal. Alternatively, the radio unit 102 receives a radio frequency signal sent by the terminal, converts the radio frequency signal into a baseband signal, and sends the baseband signal to the baseband unit 101. The baseband unit 101 receives the baseband signal, performs baseband processing on the baseband signal to obtain service data, and sends the service data to the core network.

In some embodiments, there is one or more radio units 102, that is, the network architecture 100 includes one or more radio units 102, and the baseband unit 101 can communicate with each radio unit 102 included in the network architecture 100.

In some embodiments, the baseband unit 101 and the radio unit 102 may be devices of a same vendor, or may not be devices of a same vendor.

In some embodiments, the baseband unit 101 is a radio access network distributed unit (wireless access network distributed unit, DU), a radio access network central unit (wireless access network central unit, CU), or the like, and the radio unit 102 is a radio access network remote radio unit (wireless access network radio unit, RRU), an active antenna unit (active antenna unit, AAU), or the like.

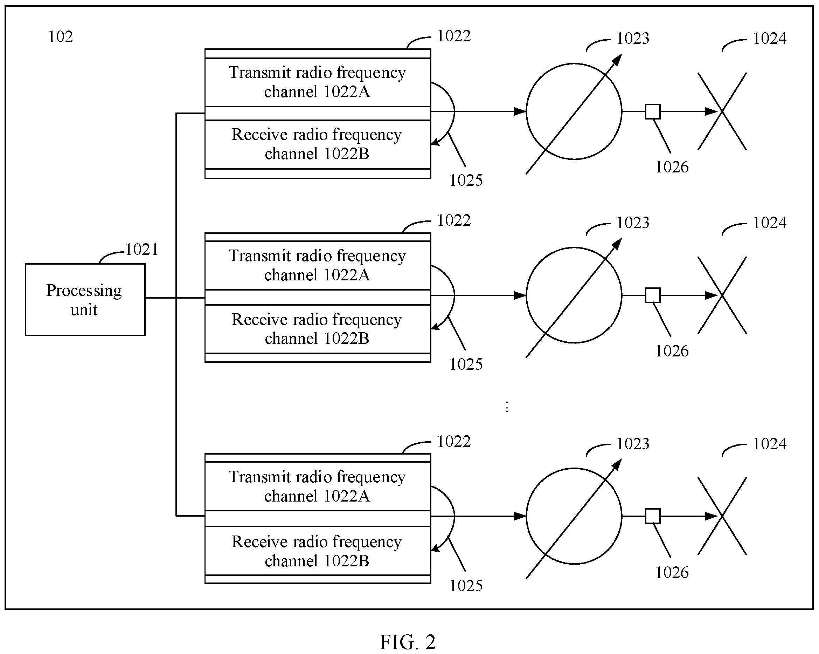

Refer to FIG. 2. The radio unit 102 includes a processing unit 1021 and at least one communication module, and each communication module includes a radio frequency channel 1022. Optionally, the radio frequency channel 1022 includes a transmit radio frequency channel 1022A and a receive radio frequency channel 1022B, and both the transmit radio frequency channel 1022A and the receive radio frequency channel 1022B are connected to the processing unit 1021.

In some embodiments, each communication module further includes components a phase shifter 1023, an antenna 1024, and other components. The phase shifter 1023 is connected to the radio frequency channel 1022 and the antenna 1024. Optionally, both the transmit radio frequency channel 1022A and the receive radio frequency channel 1022B are connected to the phase shifter 1023.

In some embodiments, a process in which the radio unit 102 sends the radio frequency signal is as follows: The processing unit 1021 sends the radio frequency signal on the transmit radio frequency channel 1022A. The phase shifter 1023 receives the radio frequency signal from the transmit radio frequency channel 1022A, and shifts a phase of the radio frequency signal. The antenna 1024 sends the radio frequency signal whose phase is shifted.

In some embodiments, a process in which the radio unit 102 receives the radio frequency signal is as follows: The antenna 1024 receives the radio frequency signal. The phase shifter 1023 shifts a phase of the radio frequency signal received by the antenna 1024, and sends, on the receive radio frequency channel 1022B, the radio frequency signal whose phase is shifted. The processing unit 1021 receives the radio frequency signal from the receive radio frequency channel 1022B.

The radio unit 102 includes one or more cells, and each cell corresponds to one or more communication modules. For any cell, the radio unit 102 communicates, by using one or more communication modules corresponding to the cell, with a terminal located in the cell.

In some embodiments, the processing unit 1021 is a processor. For example, the processing unit 1021 may be a general-purpose central processing unit (central processing unit, CPU), a network processor (network processor, NP), a microprocessor, an application-specific integrated circuit (application-specific integrated circuit, ASIC), or one or more integrated circuits configured to control program execution in the solutions of this application.

In some embodiments, for any communication module in the radio unit 102, the communication module further includes a loopback unit 1025, a detection unit 1026, and/or the like.

The loopback unit 1025 is connected to the transmit radio frequency channel 1022A and the receive radio frequency channel 1022B. The loopback unit 1025 is configured to couple the radio frequency signal transmitted on the transmit radio frequency channel 1022A to the receive radio frequency channel 1022B.

The detection unit 1026 is located between the phase shifter 1023 and the antenna 1024, and is separately connected to the phase shifter 1023 and the antenna 1024. The detection unit 1026 is configured to detect the phase of the radio frequency signal sent by the phase shifter 1023 to the antenna 1024.

In some embodiments, the loopback unit 1025 is a coupling loopback circuit or the like, and the detection unit 1026 is a coupling detection circuit or the like.

It should be noted that with development of technologies, autonomy of the radio unit 102 is increasingly high, and the radio unit 102 has a requirement for autonomously executing a task using a resource. For ease of description, the resource is referred to as a first resource, and the first resource includes a first radio frequency channel, a first time resource, a first frequency resource, and the like.

For example, the task includes a component processing task, a troubleshooting task, and/or a power saving processing task. The radio unit 102 may need the first resource for executing a component processing task, or the radio unit 102 may need the first resource for executing a troubleshooting task, or the radio unit 102 may need the first resource for executing a power saving processing task, or the like.

The component processing task is used to perform processing like calibration or detection on the component included in the radio unit 102.

In some embodiments, the component processing task includes one or more of the following: a task for calibrating the radio frequency channel 1022 of the radio unit 102, a task for calibrating the antenna 1024 of the radio unit 102, a task for detecting the component in the radio unit 102, or the like.

In some embodiments, the task for detecting the component in the radio unit 102 includes one or more of the following: a task for detecting the phase shifter 1023 in the radio unit 102, a task for detecting the antenna 1024 in the radio unit 102, or the like.

The radio unit 102 needs to start to run the loopback unit 1025 or the detection unit 1026 only in some cases. For example, the radio unit 102 starts to run the loopback unit 1025 only when the radio unit 102 needs to execute the task for calibrating the radio frequency channel 1022. In this case, the loopback unit 1025 can couple, to the receive radio frequency channel 1022B, the radio frequency signal transmitted on the transmit radio frequency channel 1022A.

For another example, the radio unit 102 starts to run the detection unit 1026 only when the radio unit 102 needs to execute the task for detecting the phase shifter 1023. In this case, the detection unit 1026 can detect the phase of the radio frequency signal sent by the phase shifter 1023 to the antenna 1024.

The troubleshooting task is used to detect and rectify a fault that occurs in the radio unit 102. For example, when clock synchronization of the radio unit 102 is lost, a clock is unavailable, or a clock level does not meet a requirement, a service cannot be transmitted between the baseband unit 101 and the radio unit 102. In this case, the radio unit 102 may request the first resource for performing clock source selection and/or clock synchronization processing.

The power saving processing task is used to disable some components in the radio unit 102. For example, the radio unit 102 disables, in a period of time corresponding to the first time resource included in the first resource, the first radio frequency channel included in the first resource. In this case, the first frequency resource in the first resource is all frequency resources on the radio unit 102, and the disabled first radio frequency channel transmits a radio frequency signal not using all the frequency resources on the radio unit 102.

When the radio unit 102 needs to use the first resource, the radio unit 102 needs to first request the first resource from the baseband unit 101. The first resource is an idle resource. In this way, the baseband unit 101 and the radio unit 102 perform service transmission not using the first resource. In this way, when executing the component processing task, the troubleshooting task, the power saving processing task, or the like using the first resource, the radio unit 102 does not interfere with the service between the baseband unit 101 and the radio unit 102.

In some embodiments, the radio unit 102 sends a service idleness request to the baseband unit 101. The baseband unit 101 receives the service idleness request, determines the first resource based on the service idleness request, and sends a service idleness allow response to the radio unit, where the service idleness allow response indicates that the first resource is an idle resource. The radio unit 102 receives the service idleness allow response and determines the first resource. In this way, the radio unit 102 implements the request for the first resource. Optionally, the service idleness response may include first information indicating the first resource. For a detailed process in which the radio unit 102 requests the first resource, refer to descriptions in any one of the following embodiments. Details are not described herein again.

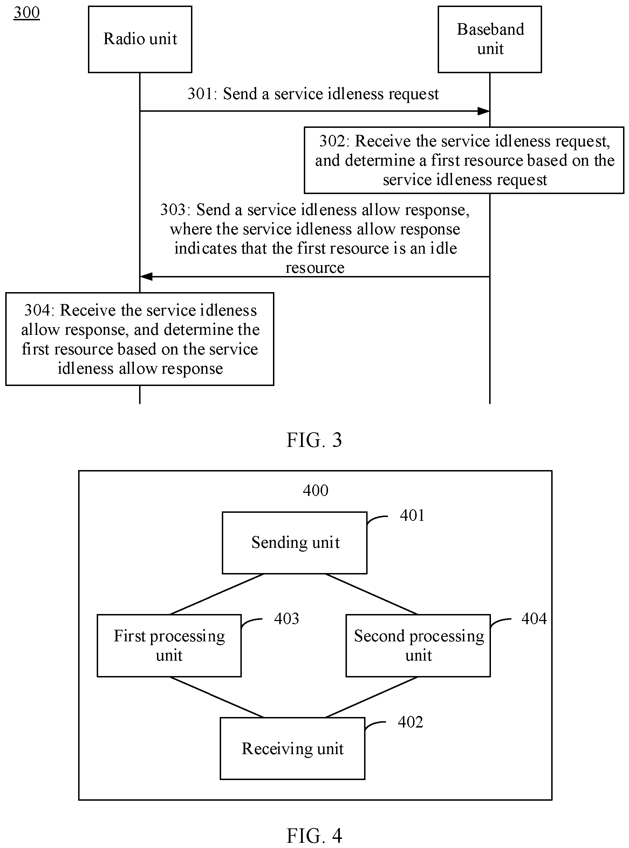

Refer to FIG. 3. An embodiment of this application provides a communication method 300. The method 300 is applied to the network architecture 100 shown in FIG. 1. A radio unit in the network architecture 100 uses the method 300 to request an idle resource from a baseband unit. The method 300 includes the following steps.

Step 301: The radio unit sends a service idleness request to the baseband unit.

In some embodiments, the radio unit determines whether the baseband unit needs to suspend transmission of a service. If the baseband unit needs to suspend the transmission of the service, the radio unit sends the service idleness request to the baseband unit. Optionally, the service is a service between the baseband unit and the radio unit. For example, the service is an air interface service between the baseband unit and the radio unit.

The radio unit may need to process a service using a resource. When the radio unit uses the resource, to avoid interfering with the service between the baseband unit and the radio unit, transmission of the service needs to be suspended.

In some embodiments, the radio unit periodically or aperiodically executes a component processing task, and the radio unit needs to execute the component processing task using a resource. When the radio unit needs to execute the component processing task, the radio unit needs the baseband unit to suspend the transmission of the service.

The component processing task includes one or more of the following: a task for calibrating a radio frequency channel of the radio unit, a task for calibrating an antenna of the radio unit, a task for detecting a component in the radio unit, or the like. The component includes a phase shifter and the like. In other words, the task for detecting the component in the radio unit includes a task for detecting the phase shifter.

For example, when the radio unit needs to execute the task for calibrating the radio frequency channel, or needs to execute the task for calibrating the antenna, or needs to execute the task for detecting the phase shifter, the radio unit needs to suspend the service between the baseband unit and the radio unit, and sends a service idleness request to the baseband unit.

In some embodiments, the radio unit may need a resource for executing a troubleshooting task, the radio unit may need a resource for executing a power saving processing task, or the like. When the radio unit needs to execute the troubleshooting task or the power saving processing task, the radio unit also needs the baseband unit to suspend the transmission of the service.

In some embodiments, the service idleness request includes second information and/or a task identifier of a first task. The second information indicates a second resource, and the second resource is a resource that the radio unit needs to request from the baseband unit. The first task is a task to be executed by the radio unit. Optionally, the first task may be a component processing task, a troubleshooting task, a power saving processing task, or the like.

In some embodiments, the second resource includes a first radio frequency channel, a second time resource, a second frequency resource, and the like.

The second frequency resource is all or some frequency resources of the radio unit. Optionally, the second frequency resource may be consecutive frequency resources, or may be discrete frequency resources. For example, the second frequency resource is consecutive 50M frequency resources, or the second frequency resource is consecutive 100M frequency resources. For another example, the second frequency resource includes at least one frequency. For example, the second frequency resource includes one frequency, three frequencies, or five frequencies. In other words, the second frequency resource is discrete frequency resources.

The first radio frequency channel is a radio frequency channel on the radio unit. Optionally, the first radio frequency channel includes all or some radio frequency channels on the radio unit.

In some embodiments, the second information includes one or more of the following information:
the channel identifier of the first radio frequency channel, a start time of the second time resource, duration of the second time resource, a start location of the second frequency resource, a resource size of the second frequency resource, or the like.

Alternatively, the second information includes one or more of the following information:
the channel identifier of the first radio frequency channel, a start time of the second time resource, duration of the second time resource, an identifier of at least one frequency in the second frequency resource, or the like.

In some embodiments, the radio unit determines the second information based on the first task.

In some embodiments, the channel identifier of the first radio frequency channel includes a cell identifier of a cell to which the first radio frequency channel belongs, a number of the first radio frequency channel in the cell, and the like; or the channel identifier of the first radio frequency channel includes an identifier of a carrier used by the first radio frequency channel, and the like.

In some embodiments, the start time of the second time resource includes a frame number of a radio frame in which a start point of the second time resource is located, a frame number of a subframe of the start point in the radio frame, and a number of a symbol of the start point in the subframe. The duration of the second time resource includes a quantity of symbols in the second time resource.

Generally, one radio frame includes multiple subframes, and one subframe includes multiple symbols. One radio frame is one period of time, the period of time includes multiple sub-periods, and the multiple sub-periods of the radio frame are multiple subframes of the radio frame. For each subframe, the subframe includes multiple sub-periods, and the multiple sub-periods of the subframe are multiple symbols of the subframe.

For example, if duration of a radio frame is 10 milliseconds, and the radio frame includes 10 subframes, duration of each subframe is 1 millisecond. For any subframe, it is assumed that the subframe includes 14 symbols.

Step 302: The baseband unit receives the service idleness request, and determines a first resource based on the service idleness request.

In step 302, after receiving the service idleness request, the baseband unit determines whether to allow a first service to be idle, where the first service is a service transmitted between the baseband unit and the radio unit. If the baseband unit allows the first service to be idle, the baseband unit determines the first resource based on the service idleness request. If the baseband unit does not allow the first service to be idle, the baseband unit stops determining the first resource.

The first resource determined by the baseband unit includes the first radio frequency channel, a first time resource, and a first frequency resource. The first time resource is a period of time. Optionally, the period of time includes one or more symbols.

The service idleness request may include the second information and/or the task identifier of the first task, or the service idleness request may not include the second information and the task identifier of the first task. In other words, the service idleness request has the following several cases. The following separately describes the several cases in detail.

Case 1: The service idleness request does not include the second information and the task identifier of the first task. In the case 1, after receiving the service idleness request, the baseband unit allocates the first resource.

The baseband unit may currently transmit the first service, or may not currently transmit the first service, where the first service is a service currently transmitted between the baseband unit and the radio unit.

When the baseband unit currently does not transmit the first service, after receiving the service idleness request, the baseband unit directly allocates the first resource. In this case, the first resource is an idle resource.

When the baseband unit currently transmits the first service, the baseband unit determines, based on service information of the first service, whether suspension of the transmission of the first service is allowed, and allocates the first resource when suspension of the transmission of the first service is allowed.

If the baseband unit allows suspension of the transmission of the first service, it indicates that the baseband unit allows the first service to be idle; or if the baseband unit does not allow suspension of the transmission of the first service, it indicates that the baseband unit does not allow the first service to be idle.

In some embodiments, the service information of the first service includes a type and/or a priority of the first service, and the like. The baseband unit determines, based on the service information of the first service, whether the first service is a service of a specified type. If the first service is the service of the specified type, the baseband unit determines that suspension of the transmission of the first service is not allowed; or if the first service is not the service of the specified type, the baseband unit determines that suspension of the transmission of the first service is allowed.

In some embodiments, the service of the specified type includes one or more of the following: a low-latency service, a high-reliability service, a high-priority service, or the like.

When the type of the first service is the low-latency service or the high-reliability service, the baseband unit determines that the first service is the service of the specified type, and determines that suspension of the first service is not allowed. Alternatively, when the priority of the first service exceeds a priority threshold, the baseband unit determines that the first service is the high-priority service, determines that the first service is the service of the specified type, and determines that suspension of the first service is not allowed. Alternatively, when the type of the first service is not the low-latency service and the high-reliability service and the priority of the first service does not exceed the priority threshold, the baseband unit determines that the first service is not the service of the specified type, and determines to allow suspension of the transmission of the first service.

When the first service is the low-latency service or the high-reliability service, if the baseband unit suspends the transmission of the first service, quality of service of the first service may deteriorate, and a delay and reliability of the first service deteriorate, causing a serious consequence. Therefore, the baseband unit does not allow suspension of the first service.

The high-priority service may be a service of a member user or an important service. If the baseband unit suspends the service of the member user, user experience of the member user may be affected. Therefore, the baseband unit does not allow suspension of the first service. If the baseband unit suspends transmission of the important service, an economic loss may be caused to the user. Therefore, the baseband unit does not allow suspension of the first service. For example, the important service may be a control service used to control a production device. If the baseband unit suspends the important service, the production device may stop production, and a production line used for a production product may break down, causing an economic loss. Therefore, the baseband device does not allow suspension of the transmission of the important service.

In some embodiments, first information indicating the first resource includes one or more of the following information: a channel identifier of the first radio frequency channel, a start time of the first time resource, duration of the first time resource, a start location of the first frequency resource, or a resource size of the first frequency resource. Alternatively, in some embodiments, first information includes one or more of the following information: a channel identifier of the first radio frequency channel, a start time of the first time resource, duration of the first time resource, or an identifier of at least one frequency in the first frequency resource.

In some embodiments, operations that the baseband unit allocates the first resource are as follows.

For the first radio frequency channel included in the first resource, the baseband unit uses all radio frequency channels in the radio unit as the first radio frequency channel. In this case, because all the radio frequency channels of the radio unit are idle, the radio unit may directly execute the first task using all or some radio frequency channels of the radio unit. The radio unit may not need the baseband unit to notify specific channels of the first radio frequency channel. Therefore, the first information may include the channel identifier of the first radio frequency channel, or may not include the channel identifier of the first radio frequency channel.

For the first time resource included in the first resource, the baseband unit determines a piece of target duration, where the target duration is a piece of maximum duration in duration required by the radio unit to process each task; determines a receiving moment at which the radio unit receives a service idleness allow response, where the service idleness request corresponds to the service idleness allow response; selects a time point as the start time based on a specified strategy, or randomly selects a time point as the start time, where the start time is not earlier than the receiving moment; and allocates the first time resource based on a piece of target duration and the start time, where duration of the first time resource is equal to the target duration. In this case, because the duration of the first time resource is equal to the target duration, actual duration required by the radio unit to execute the first task is less than or equal to the duration of the first time resource. When executing the first task from the start time of the first time resource, the radio unit can complete execution of the first task within the first time resource, and the radio unit may not need to know actual duration of the first time resource. Therefore, the first information may include the duration of the first time resource, or may not include the duration of the first time resource.

If the start time is a randomly selected time point, the first information includes the start time. If the start time is a time point selected based on a specified strategy, the radio unit may alternatively determine the start time based on the specified strategy. Therefore, the first information may include the start time, or may not include the start time.

In some embodiments, for the specified strategy, the specified strategy indicates the baseband unit to use the receiving moment as the start time, or indicates the baseband unit to add specified duration to the receiving moment to obtain the start time.

In some embodiments, for the receiving moment, the baseband unit determines a sending moment for sending the service idleness allow response, and determines the receiving moment based on the sending moment and an information transmission delay between the baseband unit and the radio unit. For example, the baseband unit adds the information transmission delay to the sending moment to obtain the receiving moment. Optionally, the information transmission delay is obtained by the baseband unit through measurement in advance.

For the first frequency resource included in the first resource, the baseband unit determines a target resource size, where the target resource size is a largest resource size in sizes of resources required by the radio unit to process all tasks; uses a start location of all the frequency resources included in the radio unit as the start location of the first frequency resource; or uses a frequency location agreed upon by the baseband unit and the radio unit in advance as the start location; and allocates the first frequency resource based on the target resource size and the start location, where a size of the first frequency resource is equal to the target resource size. In this case, because the start location is the start location of all the frequency resources or the agreed frequency location, the radio unit may determine the start location by itself when the baseband unit does not notify the start location. Therefore, the first information may include the start location, or may not include the start location. Because the resource size of the first frequency resource is equal to the target resource size, and a size of an actual resource required by the radio unit to execute the first task is less than or equal to the resource size of the first frequency resource, the radio unit may not need to know the resource size of the first frequency resource. Therefore, the first information may include the resource size of the first frequency resource; or may not include the resource size of the first frequency resource. Alternatively, the baseband unit allocates at least one frequency, where a total size of frequency resources of the at least one frequency is equal to the target resource size, and uses the at least one frequency as the first frequency resource.

In this case, the first information includes an identifier of the at least one frequency.

In some embodiments, the radio unit may send at least one piece of duration to the baseband unit before performing step 302. The at least one piece of duration includes duration required by the radio unit to process each task. The baseband unit receives the at least one piece of duration, and stores the at least one piece of duration. In this way, in step 302, the baseband unit selects a piece of maximum duration from the at least one piece of duration as the target duration. Alternatively, the baseband unit selects the piece of maximum duration from the received at least one piece of duration, and stores the piece of maximum duration. In this way, in step 302, the baseband unit directly uses the stored piece of maximum duration as the target duration.

In some embodiments, the radio unit may send at least one resource size to the baseband unit before performing step 302, where the at least one resource size includes a size of a resource required by the radio unit to process each task. The baseband unit receives the at least one resource size, and stores the at least one resource size. In this way, in step 302, the baseband unit selects a maximum resource size from the at least one resource size as the target resource size. Alternatively, the baseband unit selects the maximum resource size from the received at least one resource size, and stores the maximum resource size. In this way, in step 302, the baseband unit directly uses the stored maximum resource size as the target resource size.

In the case 1, after determining the first resource, the baseband unit sends the service idleness allow response to the radio unit. The service idleness allow response may include the first information, or may not include the first information.

In some embodiments, when the first frequency resource includes at least one frequency, the service idleness allow response includes the first information, where the first information includes an identifier of the at least one frequency, and the first information may further include information, for example, a start time of the first time resource, duration of the first time resource, and/or a channel identifier of the first radio frequency channel; and/or when the start time of the first time resource is a randomly selected time point, the service idleness allow response includes the first information, where the first information includes the start time of the first time resource, and the first information may further include information, for example, duration of the first time resource, a channel identifier of the first radio frequency channel, and/or an identifier of at least one frequency in the first frequency resource (a resource size of the first frequency resource and/or a start location of the first frequency resource).

Case 2: The service idleness request includes second information. In the case 2, after receiving the service idleness request, the baseband unit determines the first resource based on the second information.

In some embodiments, the baseband unit determines, based on the second information, the second resource as the first resource; or the baseband unit allocates, based on the second information, a resource different from the second resource as the first resource.

In some embodiments, the second resource indicated by the second information may be an idle resource. Therefore, the baseband unit determines the second resource as the first resource. Alternatively, the second resource indicated by the second information is not an idle resource, but the first service that uses the second resource can be suspended. Therefore, the baseband unit determines the second resource as the first resource. Alternatively, when the second resource is an idle resource or the first service can be suspended, the baseband unit may allocate a resource different from the second resource as the first resource.

The second information includes one or more pieces of content of a channel identifier of the first radio frequency channel, a start time of the second time resource, duration of the second time resource, a start location of the second frequency resource, a resource size of the second frequency resource, and the like. Alternatively, the second information includes one or more pieces of content of a channel identifier of the first radio frequency channel, a start time of the second time resource, duration of the second time resource, an identifier of at least one frequency in the second frequency resource, and the like. The following lists several examples of specific content of the second information. The several examples are respectively as follows.

Example 1: The second information includes a channel identifier of the first radio frequency channel, a start time of the second time resource, duration of the second time resource, a start location of the second frequency resource, and a resource size of the second frequency resource. Alternatively, the second information includes a channel identifier of the first radio frequency channel, a start time of the second time resource, duration of the second time resource, and an identifier of at least one frequency of the second frequency resource.

In the example 1, the baseband unit determines, based on the second information, the second resource indicated by the second information. If no service uses the second resource, it indicates that the second resource is an idle resource, and the baseband unit determines the second resource as the first resource, or allocates a resource different from the second resource as the first resource.

If a service uses the second resource, it indicates that the second resource is not an idle resource. For ease of description, the service is referred to as the first service, and the baseband unit determines, based on service information of the first service, whether suspension of transmission of the first service is allowed. If suspension of the transmission of the first service is allowed, it indicates that the baseband unit allows the first service to be idle, and determines the second resource as the first resource or allocates a resource different from the second resource as the first resource. If suspension of the transmission of the first service is not allowed, it indicates that the baseband unit does not allow the first service to be idle.

In some embodiments, the first time resource included in the first resource allocated by the baseband unit and the second time resource included in the second resource are different. For example, a start time of the first time resource allocated by the baseband unit is earlier or later than a start time of the second time resource. In this case, if the start time of the first time resource is different from the start time of the second time resource, the first information includes the starting position of the first time resource. Because duration of the first time resource is the same as duration of the second time resource, the first frequency resource is the same as the second frequency resource, and/or the first radio frequency channel in the first resource is the same as the first radio frequency channel in the second resource, the first information may not include other content, for example, the duration of the first time resource, the channel identifier of the first radio frequency channel, or the identifier of the at least one frequency in the first frequency resource (the start location of the first frequency resource and/or the resource size of the first frequency resource); or may include this other content.

In some embodiments, the first frequency resource included in the first resource allocated by the baseband unit and the second frequency resource included in the second resource are different.

For example, a start location of the first frequency resource allocated by the baseband unit is different from a start location of the second frequency resource. In this case, the first information includes the start location of the first frequency resource. Because a resource size of the first frequency resource is the same as a resource size of the second frequency resource, the first time resource is the same as the second time resource, and/or the first radio frequency channel in the first resource is the same as the first radio frequency channel in the second resource, the first information may not include other content, for example, the resource size of the first frequency resource, the channel identifier of the first radio frequency channel, the start time of the first time resource, and/or the duration of the first time resource; or may include this other content.

For another example, a frequency included in the first frequency resource allocated by the baseband unit and a frequency included in the second frequency resource are completely or partially different. In this case, the first information includes an identifier of the at least one frequency. Because the first time resource is the same as the second time resource and/or the first radio frequency channel in the first resource is the same as the first radio frequency channel in the second resource, the first information may not include other content, for example, a channel identifier of the first radio frequency channel, a start time of the first time resource, and/or duration of the first time resource; or may include this other content.

In the example 1, if the first resource is the same as the second resource, the first information indicating the first resource is the same as the second information indicating the second resource. The service idleness allow response sent by the baseband unit to the radio unit may include the first information, or may not include the first information.

Example 2: The second information includes a channel identifier of the first radio frequency channel, duration of the second time resource, and a resource size of the second frequency resource.

In the example 2, the baseband unit determines whether to currently transmit a first service, where the first service is a service that uses the first radio frequency channel. If the first service is transmitted, the baseband unit determines, based on the service information of the first service, whether suspension of transmission of the first service is allowed.

If no first service is transmitted, or if the first service is transmitted but the baseband unit allows suspension of the transmission of the first service, the baseband unit determines a start time of the first time resource to obtain the first time resource, where the duration of the first time resource is equal to the duration of the second time resource; and allocates a start location of the first frequency resource to obtain the first frequency resource, where the resource size of the first frequency resource is equal to the resource size of the second frequency resource. In this way, the first radio frequency channel, the first time resource, and the first frequency resource that are included in the first resource are obtained. If the first service is transmitted but the baseband unit does not allow suspension of the transmission of the first service, it indicates that the baseband unit does not allow the first service to be idle.

In the example 2, because the first radio frequency channel in the first resource is the same as the first radio frequency channel in the second resource, the resource size of the first frequency resource is the same as the resource size of the second frequency resource, and the duration of the first time resource is the same as the duration of the second time resource, the first information includes the start time of the first time resource and the starting position of the first frequency resource. The first information may not include other content, for example, the channel identifier of the first radio frequency channel, the duration of the first time resource, and/or the resource size of the first frequency resource; or may include this other content.

Example 3: The second information includes duration of the second time resource and a resource size of the second frequency resource.

In the example 3, the baseband unit determines whether to currently transmit a first service, where the first service is a service between the baseband unit and the radio unit. If the first service is transmitted, the baseband unit determines, based on the service information of the first service, whether suspension of transmission of the first service is allowed.

If no first service is transmitted, or if the first service is transmitted but the baseband unit allows suspension of the transmission of the first service, the baseband unit uses all radio frequency channels on the radio unit as the first radio frequency channel, determines a start time of the first time resource to obtain the first time resource, where the duration of the first time resource is equal to the duration of the second time resource, and determines the start location of the first frequency resource, to obtain the first frequency resource, where the resource size of the first frequency resource is equal to the resource size of the second frequency resource. In this way, the first radio frequency channel, the first time resource, and the first frequency resource that are included in the first resource are obtained. If the first service is transmitted but the baseband unit does not allow suspension of the transmission of the first service, it indicates that the baseband unit does not allow the first service to be idle.

In the example 3, because the first radio frequency channel is all radio frequency channels on the radio unit, the resource size of the first frequency resource is the same as the resource size of the second frequency resource, and the duration of the first time resource is the same as the duration of the second time resource, the first information includes the start time of the first time resource and the starting position of the first frequency resource. The first information may not include other content, for example, the channel identifier of the first radio frequency channel, the duration of the first time resource, and/or the resource size of the first frequency resource; or may include this other content.

Example 4: The second information includes a channel identifier of the first radio frequency channel.

In the example 4, the baseband unit determines whether to currently transmit a first service, where the first service is a service that uses the first radio frequency channel. If the first service is transmitted, the baseband unit determines, based on the service information of the first service, whether suspension of transmission of the first service is allowed. If no first service is transmitted, or if the first service is transmitted but the baseband unit allows suspension of the transmission of the first service, the baseband unit allocates the first time resource and the first frequency resource. In this way, the first radio frequency channel, the first time resource, and the first frequency resource that are included in the first resource are obtained.

In some embodiments, operations that the baseband unit allocates the first time resource are as follows: The baseband unit determines a piece of target duration, where the target duration is a piece of maximum duration in duration required by the radio unit to process all tasks; and allocates the first time resource, where the duration of the first time resource is equal to the target duration.

In some embodiments, operations that the baseband unit allocates the first frequency resource are as follows: The baseband unit determines a target resource size, where the target resource size is a maximum resource size in sizes of resources required by the radio unit to process all tasks; and allocates the first frequency resource, where the resource size of the first frequency resource is equal to the maximum resource size, or allocates at least one frequency, where a total frequency resource size of the at least one frequency is equal to the target resource size, and uses the at least one frequency as the first frequency resource.

In the example 4, because the first radio frequency channel in the first resource is the same as the first radio frequency channel in the second resource, the first information includes a start time of the first time resource, duration of the first time resource, and an identifier of at least one frequency in the first frequency resource, or the first information includes a start time of the first time resource, duration of the first time resource, a starting position of the first frequency resource, and a resource size of the first frequency resource. The first information may not include the channel identifier of the first radio frequency channel, or may include the channel identifier of the first radio frequency channel.

In addition to the four examples (the example 1 to the example 4) listed above, there are other examples of specific content of the second information, which are not listed one by one herein.

Case 3: The service idleness request includes the task identifier of the first component processing task. In the case 3, after receiving the service idleness request, the baseband unit determines the first resource based on the task identifier of the first component processing task.

In some embodiments, the baseband unit obtains corresponding information from a correspondence between the task identifier and the second information based on the task identifier of the first component processing task, and determines the first resource based on the obtained information.

The obtained information includes one or more pieces of content of a channel identifier of the first radio frequency channel, duration of the second time resource, a start location of the second frequency resource, a resource size of the second frequency resource, and the like. Alternatively, the obtained information includes one or more pieces of content of a channel identifier of the first radio frequency channel, duration of the second time resource, an identifier of at least one frequency, and the like.

For a detailed implementation process in which the baseband unit determines the first resource based on the obtained information, refer to the detailed implementation processes of determining the first resource described in the example 1 to the example 4. Details are not described herein again.

Before performing step 302, the radio unit sends the task identifier of the first task and the second information to the baseband unit. In this case, the second information may include the channel identifier of the first radio frequency channel, the duration of the second time resource, the resource size of the second frequency resource, and/or the like. The baseband unit receives the task identifier of the first task and the second information, and correspondingly stores the task identifier of the first task and the second information in the correspondence between the task identifier and the second information.

In some embodiments, if the baseband unit transmits the first service and allows the first service to be idle, the baseband unit stops, in the period of time corresponding to the first time resource, transmitting the first service using the first frequency resource.

Step 303: The baseband unit sends a service idleness allow response to the radio unit, where the service idleness allow response indicates that the first resource is an idle resource.

In step 303, when the baseband unit determines that the first service is not allowed to be idle, the baseband unit sends a service idleness rejection response to the radio unit. After receiving the service idleness rejection response, the radio unit resends the service idleness request to the baseband unit after the first moment. The first moment is after the second moment, and the second moment is an actual moment at which the radio unit receives the service idleness rejection response.

In some embodiments, the service idleness rejection response includes delay duration, and duration between the first moment and the second moment is greater than or equal to the delay duration. Because the service idleness rejection response includes delay duration, the radio unit resends the service idleness request after delaying for a period of time starting from the second moment at which the service idleness rejection response is received. Duration of the period of time is greater than or equal to the delay duration, so as to prevent the radio unit from frequently sending the service idleness request to the baseband unit.

In some embodiments, the service idleness rejection response further includes a rejection reason of the baseband unit. Optionally, the rejection reason includes that the first service currently transmitted between the baseband unit and the radio unit cannot be suspended, or the first service is a low-latency service, a high-reliability service, a high-priority service, or the like.

The service idleness allow response may include first information, where the first information indicates the first resource, or the service idleness allow response may not include the first information.

In some embodiments, for the foregoing case 1, the service idleness request does not include the second information, and the service idleness allow response may not include the first information, or may include the first information.

For the foregoing example 1, if the first resource is the same as the second resource, the first information indicating the first resource is the same as the second information indicating the second resource, and the service idleness allow response may not include the first information, or may include the first information. If the first resource is different from the second resource, the first information indicating the first resource is different from the second information indicating the second resource, and the service idleness allow response includes the first information.

For the foregoing example 2, the example 3, or the example 4, the service idleness allow response may not include the first information, or may include the first information.

Step 304: After receiving the service idleness allow response, the radio unit determines the first resource based on the service idleness allow response.

In some embodiments, the service idleness allow response does not include the first information, and the radio unit may determine the first resource in the following several cases.

In a first case, for the foregoing case 1, the service idleness request does not include the first information, and the service idleness allow response does not include the first information. A process in which the radio unit determines the first radio frequency channel, the first time resource, and the first frequency resource that are included in the first resource is shown as follows.

For the first radio frequency channel, the radio unit uses all or some radio frequency channels on the radio unit as the first radio frequency channel included in the first resource. In the foregoing case 1, because the first radio channel determined by the baseband unit includes all radio frequency channels on the radio unit, the baseband unit transmits a service not using the radio frequency channel on the radio unit. Therefore, the radio unit may use all or some radio frequency channels on the radio unit as the first radio frequency channel included in the first resource.

For the first time resource, the radio unit determines a start time of the first time resource based on a third moment, where the third moment is an actual receiving moment at which the radio unit receives the service idleness allow response; and determines the first time resource based on the duration required for executing the first task and the start time, where the duration of the first time resource is equal to the duration required for executing the first task.

In some embodiments, the radio unit determines the third moment as the start time of the first time resource, or the radio unit adds specified duration to the third moment to obtain the start time of the first time resource.

For the first frequency resource, the radio unit uses, as the start location of the first frequency resource, a frequency location agreed upon by the radio unit and the baseband unit, or uses a start location of all frequency resources of the radio unit as the start location of the first frequency resource; and determines the first frequency resource based on a size of a frequency resource required for executing the first task and the start location, where the resource size of the first frequency resource is equal to the size of the frequency resource required for executing the first task.

In a second case, for the foregoing example 1, the second resource requested by the radio unit is the same as the first resource determined by the baseband unit, and the service idleness request does not include the first information. In this case, the second information indicating the second resource is the same as the first information indicating the first resource, and the radio unit determines the first resource based on the second information.

In some embodiments, the service idleness allow response includes the first information, and the radio unit may determine the first resource in the following several cases.

In the third case, for the foregoing case 1, the example 1, the example 2, the example 3, or the example 4, the radio unit determines the first resource based on the first information when the first information includes the channel identifier of the first radio frequency channel, the start time of the first time resource, the duration of the first time resource, the start location of the first frequency resource, and the resource size of the first frequency resource, or when the first information includes the channel identifier of the first radio frequency channel, the start time of the first time resource, the duration of the first time resource, and the identifier of the at least one frequency of the first frequency resource.

In a fourth case, for the foregoing case 1, the service idleness request does not include the first information, but the service idleness allow response includes the first information, where the first information includes the start time of the first time resource and/or the identifier of the at least one frequency of the first frequency resource. A process in which the radio unit determines the first radio frequency channel, the first time resource, and the first frequency resource that are included in the first resource is shown as follows.

For the first radio frequency channel, the radio unit uses all or some radio frequency channels on the radio unit as the first radio frequency channel included in the first resource. For the first time resource, if the first information includes the start time of the first time resource, the radio unit determines the first time resource based on the duration required for executing the first task and the start time, where the duration of the first time resource is equal to the duration required for executing the first task. For the first frequency resource, if the first information includes an identifier of at least one frequency in the first time resource, the radio unit determines the first frequency resource based on the identifier of the at least one frequency.

If the first information does not include the start time of the first time resource, a manner in which the radio unit determines the first time resource is the same as a manner in which the radio unit determines the first time resource in the first case. If the first information does not include the identifier of the at least one frequency of the first frequency resource, a manner in which the radio unit determines the first frequency resource is the same as a manner in which the radio unit determines the first frequency resource in the foregoing first case.

In a fifth case, for the foregoing example 1, the second resource requested by the radio unit is different from the first resource determined by the baseband unit, the service idleness request includes first information, where the first information includes a start time of the first time resource and/or a starting position of the first frequency resource, or the first information includes a start time of the first time resource and/or an identifier of at least one frequency of the first frequency resource. A process in which the radio unit determines the first radio frequency channel, the first time resource, and the first frequency resource that are included in the first resource is shown as follows.

For the first radio frequency channel, the radio unit uses the first radio frequency channel included in the requested second resource as the first radio frequency channel of the first resource. For the first time resource, the radio unit uses duration of the second time resource as the duration of the first time resource, and determines the first time resource based on the start time and the duration of the first time resource.

For the first frequency resource, the radio unit uses a resource size of the second frequency resource as the resource size of the first frequency resource, and determines the first frequency resource based on the start location and the resource size of the first frequency resource. Alternatively, the radio unit determines the at least one frequency of the first frequency resource based on the identifier that is of the at least one frequency and that is included in the first information.

If the first information does not include the start time of the first time resource, the radio unit uses the requested second time resource as the first time resource. If the first information does not include the start time of the first frequency resource or the identifier of the at least one frequency of the first frequency resource, the radio unit uses the requested second frequency resource as the first frequency resource.

In a sixth case, for the foregoing example 2, the second information in the service idleness request includes the channel identifier of the first radio frequency channel, the duration of the second time resource, and the resource size of the second frequency resource, and the first information in the service idleness allow response includes a start time of the first time resource and a start location of the first frequency resource. A process in which the radio unit determines the first radio frequency channel, the first time resource, and the first frequency resource that are included in the first resource is shown as follows.

For the first radio frequency channel, the radio unit uses the first radio frequency channel included in the requested second resource as the first radio frequency channel of the first resource. For the first time resource, the radio unit uses duration of the second time resource as the duration of the first time resource, and determines the first time resource based on the start time and the duration of the first time resource. For the first frequency resource, the radio unit uses a resource size of the second frequency resource as the resource size of the first frequency resource, and determines the first frequency resource based on the start location and the resource size of the first frequency resource.

In a seventh case, for the foregoing example 3, the second information in the service idleness request includes the duration of the second time resource and the resource size of the second frequency resource, and the first information in the service idleness allow response includes the start time of the first time resource and the start location of the first frequency resource. A process in which the radio unit determines the first radio frequency channel, the first time resource, and the first frequency resource that are included in the first resource is shown as follows.

For the first radio frequency channel, the radio unit uses all or some radio frequency channels on the radio unit as the first radio frequency channel included in the first resource. For the first time resource, the radio unit uses duration of the second time resource as the duration of the first time resource, and determines the first time resource based on the start time and the duration of the first time resource. For the first frequency resource, the radio unit uses a resource size of the second frequency resource as the resource size of the first frequency resource, and determines the first frequency resource based on the start location and the resource size of the first frequency resource.

In an eighth case, for the foregoing example 4, the second information in the service idleness request includes a channel identifier of the first radio frequency channel, and the first information in the service idleness allow response includes a start time of the first time resource, duration of the first time resource, and an identifier of at least one frequency in the first frequency resource, or the first information includes a start time of the first time resource, duration of the first time resource, a starting position of the first frequency resource, and a resource size of the first frequency resource. A process in which the radio unit determines the first radio frequency channel, the first time resource, and the first frequency resource that are included in the first resource is shown as follows.

For the first radio frequency channel, the radio unit uses the first radio frequency channel included in the requested second resource as the first radio frequency channel of the first resource. For the first time resource, the radio unit determines the first time resource based on the start time and the duration of the first time resource that are included in the first information. For the first frequency resource, the radio unit determines the first frequency resource based on the start location and the resource size of the first frequency resource that are included in the first information; or determines the first frequency resource based on the identifier of the at least one frequency of the first frequency resource that is included in the first information.

In some embodiments, after determining the first resource, the radio unit executes the first task using the first resource.

For example, the first task is a task for calibrating the radio frequency channel of the radio unit, and the first radio frequency channel includes a transmit radio frequency channel and a receive radio frequency channel. The radio unit starts a loopback unit connecting the transmit radio frequency channel and the receive radio frequency channel, and sends a specified calibration sequence on the transmit radio frequency channel. The loopback unit couples a signal transmitted on the transmit radio frequency channel to the receive radio frequency channel. The radio unit detects an amplitude, a delay, and a phase of the signal on the receive radio frequency channel, and calibrates, based on the detected amplitude, delay, and phase, and an amplitude and a phase of the calibration sequence, the transmit radio frequency channel and the receive radio frequency channel that are included in the first radio frequency channel.

For another example, the first task is a task for detecting a phase shifter of a radio unit, the transmit radio frequency channel and the receive radio frequency channel that are included in the first radio frequency channel are connected to the phase shifter, and a detection unit exists between the phase shifter and the antenna. The radio unit starts the detection unit, and sets, to a specified amplitude, a phase deviation amplitude of the phase shifter for the signal; and sends a specified first detection sequence on the transmit radio frequency channel. The phase shifter receives the first detection sequence from the transmit radio frequency channel, shifts a phase of the first detection sequence to obtain a second detection sequence, and sends the second detection sequence to the antenna. The detection unit detects a phase of the second detection sequence sent to the antenna. When a phase difference between the phase of the first detection sequence and the phase of the second detection sequence is equal to the specified amplitude, the radio unit determines that the phase shifter is normal. When the phase difference between the phase of the first detection sequence and the phase of the second detection sequence is not equal to the specified amplitude, the radio unit determines that the phase shifter is faulty.

The first task may alternatively be another task, which is not listed one by one herein.

In this embodiment of this application, the radio unit sends the service idleness request to the baseband unit. The radio unit receives a service idleness allow response sent by the baseband unit, where the service idleness allow response indicates that a first resource is an idle resource. After the radio unit receives the service idleness allow response, both the baseband unit and the radio unit know that the first resource is the idle resource. The baseband unit may stop transmitting the first service using the first resource, where the first service is a service of the radio unit, and the radio unit may autonomously execute the first task using the first resource. In this way, interfering with the first service is avoided when the radio unit autonomously executes the first task using the first resource, and performance of the first service is avoided to be affected, for example, a bit error increase and retransmission of the first service are avoided, performance of the first service is avoided to be affected, and deterioration of a key performance indicator (key performance indicator, KPI) indication is avoided.

Refer to FIG. 4. An embodiment of this application provides a communication apparatus 400. The apparatus 400 is deployed on the radio unit 102 in the network architecture 100 shown in FIG. 1, or is deployed on the radio unit 102 shown in FIG. 2, or is deployed on the radio unit in the method 300 shown in FIG. 3. The apparatus 400 includes:
a sending unit 401, configured to send a service idleness request to a baseband unit; and
a receiving unit 402, configured to receive a service idleness allow response sent by the baseband unit, where the service idleness allow response indicates that a first resource is an idle resource.

Optionally, for a detailed implementation process in which the sending unit 401 sends the service idleness request, refer to related content of step 301 in the method 300 shown in FIG. 3. Details are not described herein again.

Optionally, for a detailed implementation process in which the receiving unit 402 receives the service idleness allow response, refer to related content of step 304 in the method 300 shown in FIG. 3. Details are not described herein again.

Optionally, the apparatus 400 further includes:
a first processing unit 403, configured to execute a first component processing task using the first resource, where the first component processing task includes one or more of the following: a task for calibrating a radio frequency channel of the apparatus 400, a task for calibrating an antenna of the apparatus 400, or a task for detecting a component in the apparatus 400.

Optionally, for a detailed implementation process in which the receiving unit 402 receives the service idleness allow response, refer to related content of step 304 in the method 300 shown in FIG. 3. Details are not described herein again.

Optionally, for a detailed implementation process in which the processing unit 403 executes the first component processing task, refer to related content of step 304 in the method 300 shown in FIG. 3. Details are not described herein again.

Optionally, the first resource includes a first radio frequency channel, a first time resource, and a first frequency resource, and the first radio frequency channel is a radio frequency channel on the apparatus 400.

Optionally, the service idleness allow response includes first information, and the first information indicates the first resource.

Optionally, the first information includes one or more of the following information:
a channel identifier of the first radio frequency channel, a start time of the first time resource, duration of the first time resource, a start location of the first frequency resource, or a resource size of the first frequency resource.

Alternatively, the first information includes one or more of the following information:
a channel identifier of the first radio frequency channel, a start time of the first time resource, duration of the first time resource, or an identifier of at least one frequency in the first frequency resource.

Optionally, the service idleness request includes second information and/or a task identifier of a first component processing task, the second information indicates a second resource, and the first component processing task includes one or more of the following: a task for calibrating a radio frequency channel of the apparatus 400, a task for calibrating an antenna of the apparatus 400, or a task for detecting a component in the apparatus 400.

Optionally, the second resource includes the first radio frequency channel, a second time resource, and a second frequency resource, and the first radio frequency channel is a radio frequency channel on the apparatus 400.

Optionally, the second information includes one or more of the following information:
the channel identifier of the first radio frequency channel, a start time of the second time resource, duration of the second time resource, a start location of the second frequency resource, or a resource size of the second frequency resource.

Alternatively, the second information includes one or more of the following information:
the channel identifier of the first radio frequency channel, a start time of the second time resource, duration of the second time resource, or an identifier of at least one frequency in the second frequency resource.

Optionally, the apparatus 400 further includes:
a second processing unit 404, configured to determine second information based on the first component processing task.

Optionally, the sending unit 401 is further configured to send the task identifier of the first component processing task and the second information to the baseband unit.

In this embodiment of this application, the sending unit sends the service idleness request to the baseband unit. When allowing a service to be idle, the baseband unit sends a service idleness allow response to the apparatus 400, where the service idleness allow response indicates that the first resource is an idle resource. In this way, after the receiving unit receives the service idleness allow response, both the baseband unit and the apparatus 400 know that the first resource is an idle resource. The baseband unit may stop transmitting the first service using the first resource. The first service is a service of the apparatus 400. The apparatus 400 may autonomously use the first resource, and interfering with the first service is avoided when the apparatus 400 autonomously uses the first resource.

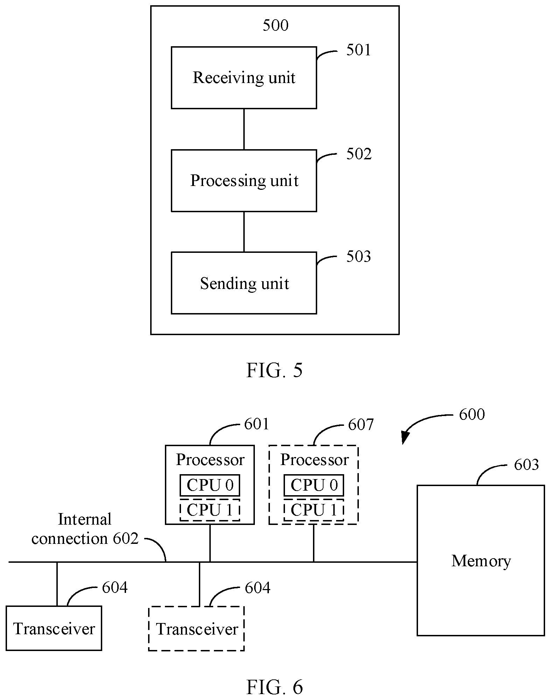

Refer to FIG. 5. An embodiment of this application provides a communication apparatus 500. The apparatus 500 is deployed on the baseband unit 101 in the network architecture 100 shown in FIG. 1, or deployed on the baseband unit in the method 300 shown in FIG. 3. The apparatus 500 includes:
a receiving unit 501, configured to receive a service idleness request sent by a radio unit;
a processing unit 502, configured to determine a first resource based on the service idleness request; and
a sending unit 503, configured to send a service idleness allow response to the radio unit, where the service idleness allow response indicates that the first resource is an idle resource.

Optionally, for a detailed implementation process in which the receiving unit 501 receives the service idleness request, refer to related content of step 302 in the method 300 shown in FIG. 3. Details are not described herein again.

Optionally, for a detailed implementation process in which the processing unit 502 determines the first resource, refer to related content of step 302 in the method 300 shown in FIG. 3. Details are not described herein again.

Optionally, for a detailed implementation process in which the sending unit 503 sends the service idleness allow response, refer to related content of step 303 in the method 300 shown in FIG. 3. Details are not described herein again.

Optionally, the first resource includes a first radio frequency channel, a first time resource, and a first frequency resource, and the first radio frequency channel is a radio frequency channel on the radio unit.

Optionally, the service idleness allow response includes first information, and the first information indicates the first resource.

Optionally, the first information includes one or more of the following information:
a channel identifier of the first radio frequency channel, a start time of the first time resource, duration of the first time resource, a start location of the first frequency resource, or a resource size of the first frequency resource.

Alternatively, the first information includes one or more of the following information:
a channel identifier of the first radio frequency channel, a start time of the first time resource, duration of the first time resource, or an identifier of at least one frequency in the first frequency resource.

Optionally, the processing unit 502 is further configured to stop, in the period of time corresponding to the first time resource, transmitting a first service using the first frequency resource, where the first service is a service of the radio unit.

Optionally, for a detailed implementation process in which the processing unit 502 stops transmitting the first service using the first frequency resource, refer to related content of step 302 in the method 300 shown in FIG. 3. Details are not described herein again.

Optionally, the service idleness request includes second information and/or a task identifier of a first component processing task, the second information indicates a second resource, and the first component processing task includes one or more of the following: a task for calibrating a radio frequency channel of the radio unit, a task for calibrating an antenna of the radio unit, or a task for detecting a component in the radio unit.

Optionally, the second resource includes the first radio frequency channel, a second time resource, and a second frequency resource, and the first radio frequency channel is a radio frequency channel on the radio unit.

Optionally, the second information includes one or more of the following information:
the channel identifier of the first radio frequency channel, a start time of the second time resource, duration of the second time resource, a start location of the second frequency resource, or a resource size of the second frequency resource.

Alternatively, the second information includes one or more of the following information:
the channel identifier of the first radio frequency channel, a start time of the second time resource, duration of the second time resource, or an identifier of at least one frequency in the second frequency resource.

Optionally, the processing unit 502 is configured to determine, based on service information of the first service, whether transmission of the first service can be suspended, where the first service is a service of the radio unit; and
when determining that transmission of the first service can be suspended, determine the first resource based on the service idleness request.

Optionally, for a detailed implementation process in which the processing unit 502 determines whether transmission of the first service can be suspended, refer to related content of step 302 in the method 300 shown in FIG. 3. Details are not described herein again.

Optionally, the service idleness request includes second information; and the processing unit 502 is configured to:
determine the second resource as the first resource based on the second information; or
allocate, based on the second information, a resource different from the second resource as the first resource.

Optionally, for a detailed implementation process in which the processing unit 502 allocates the first resource, refer to related content of step 302 in the method 300 shown in FIG. 3. Details are not described herein again.

Optionally, the service idleness request includes the task identifier of the first component processing task, and the processing unit 502 is configured to:
obtain corresponding information from a correspondence between the task identifier and the second information based on the task identifier of the first component processing task; and
determine the first resource based on the obtained information.

Optionally, for a detailed implementation process in which the processing unit 502 obtains information and determines the first resource based on the obtained information, refer to related content of step 302 in the method 300 shown in FIG. 3. Details are not described herein again.

Optionally, the sending unit 503 is further configured to receive the task identifier of the first component processing task and the second information that are sent by the radio unit.

The processing unit 502 is configured to store a correspondence between the task identifier of the first component processing task and the second information.

In this embodiment of this application, after the receiving unit receives the service idleness request, the processing unit determines the first resource, and when the processing unit allows a service to be idle, the sending unit sends a service idleness allow response to the radio unit, where the service idleness allow response indicates that the first resource is an idle resource. In this way, after the radio unit receives the service idleness allow response, both the apparatus 500 and the radio unit know that the first resource is the idle resource. The processing unit may stop transmitting the first service using the first resource, where the first service is a service of the radio unit, and the radio unit may autonomously use the first resource. In this way, interfering with the first service is avoided when the radio unit autonomously uses the first resource. For example, the radio unit autonomously executes a component processing task using the first resource. This meets a requirement of the radio unit for autonomously executing the component processing task, and avoids interfering with the first service when executing the component processing task.

Refer to FIG. 6. An embodiment of this application provides a diagram of a communication apparatus 600. The apparatus 600 may be the radio unit provided in any one of the foregoing embodiments, for example, may be the radio unit in the network architecture 100 shown in FIG. 1, the radio unit shown in FIG. 2, or the radio unit in the method 300 shown in FIG. 3. The apparatus 600 includes at least one processor 601, an internal connection 602, a memory 603, and at least one transceiver 604.

The apparatus 600 is an apparatus of a hardware structure, and may be configured to implement a functional module in the apparatus 400 shown in FIG. 4. For example, a person skilled in the art may figure out that the first processing unit 403 and the second processing unit 404 in the apparatus 400 shown in FIG. 4 may be implemented by the at least one processor 601 by invoking code in the memory 603, the sending unit 401 and the receiving unit 402 in the apparatus 400 shown in FIG. 4 may be implemented by using the at least one transceiver 604.

The apparatus 600 may be further configured to implement a function of the radio unit in any one of the foregoing embodiments.

The processor 601 may be a general-purpose central processing unit (central processing unit, CPU), a network processor (network processor, NP), a microprocessor, an application-specific integrated circuit (application-specific integrated circuit, ASIC), or one or more integrated circuits configured to control program execution in the solutions of this application.

The internal connection 602 may include a path for transmitting information between the foregoing components. The internal connection 602 may be a board, a bus, or the like.

The at least one transceiver 604 is configured to communicate with another device or a communication network.

The memory 603 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including a compressed optical disc, a laser disc, an optical disc, a digital versatile optical disc, a Blu-ray disc, and the like), a magnetic disk storage medium, or another magnetic storage device, or any another medium that can be configured to carry or store expected program code in a form of an instruction structure or a data structure and that is accessible to a computer, but is not limited thereto. The memory may exist independently, and is connected to the processor through the bus. The memory may alternatively be integrated with the processor.

The memory 603 is configured to store application program code for executing the solutions in this application, and the processor 601 controls execution. The processor 601 is configured to execute the application program code stored in the memory 603, and cooperate with the at least one transceiver 604, so that the apparatus 600 implements functions in the method in this patent.

During specific implementation, in an embodiment, the processor 601 may include one or more CPUs, for example, a CPU 0 and a CPU 1 in FIG. 6.

In a specific implementation, in an embodiment, the apparatus 600 may include multiple processors, for example, the processor 601 and a processor 607 shown in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

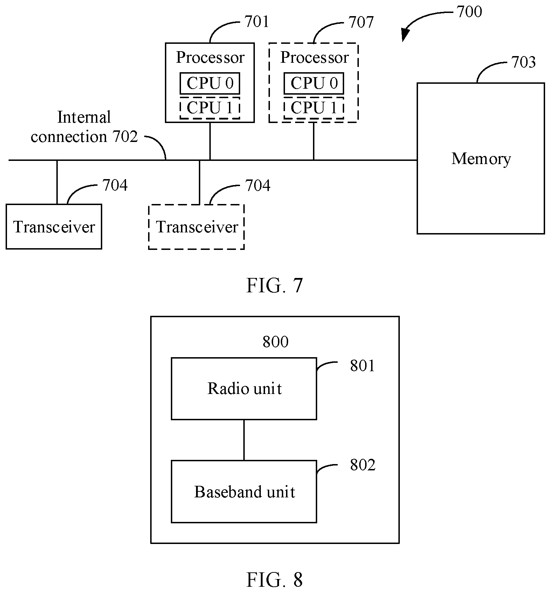

Refer to FIG. 7. An embodiment of this application provides a diagram of a communication apparatus 700. The apparatus 700 may be the baseband unit provided in any one of the foregoing embodiments, for example, may be the baseband unit in the network architecture 100 shown in FIG. 1 or the baseband unit in the method 300 shown in FIG. 3. The apparatus 700 includes at least one processor 701, an internal connection 702, a memory 703, and at least one transceiver 704.

The apparatus 700 is an apparatus of a hardware structure, and may be configured to implement a functional module in the apparatus 500 shown in FIG. 5. For example, a person skilled in the art may figure out that the processing unit 502 in the apparatus 500 shown in FIG. 5 may be implemented by the at least one processor 701 by invoking code in the memory 703, and the receiving unit 501 and the sending unit 503 in the apparatus 500 shown in FIG. 5 may be implemented by the at least one transceiver 704.

The apparatus 700 may be further configured to implement a function of the baseband unit in any one of the foregoing embodiments.

The processor 701 may be a general-purpose central processing unit (central processing unit, CPU), a network processor (network processor, NP), a microprocessor, an application-specific integrated circuit (application-specific integrated circuit, ASIC), or one or more integrated circuits configured to control program execution in the solutions of this application.

The internal connection 702 may include a path for transmitting information between the foregoing components. The internal connection 702 may be a board, a bus, or the like.

The at least one transceiver 704 is configured to communicate with another device or a communication network.

The memory 703 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile disc, a Blu-ray disc, and the like), a magnetic disk storage medium or another magnetic storage device, or another medium that can be configured to carry or store expected program code in a form of an instruction structure or a data structure and that is accessible to a computer, but is not limited thereto. The memory may exist independently, and is connected to the processor through the bus. The memory may alternatively be integrated with the processor.

The memory 703 is configured to store application program code for executing the solutions in this application, and the processor 701 controls execution. The processor 701 is configured to execute the application program code stored in the memory 703, and cooperate with the at least one transceiver 704, so that the apparatus 700 implements functions in the method in this patent.

During specific implementation, in an embodiment, the processor 701 may include one or more CPUs, for example, a CPU 0 and a CPU 1 in FIG. 7.

In a specific implementation, in an embodiment, the apparatus 700 may include multiple processors, for example, the processor 701 and a processor 707 shown in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

Refer to FIG. 8. Embodiments of this application provide a communication system 800. The system 800 includes the apparatus 400 shown in FIG. 4 and the apparatus 500 shown in FIG. 5, or the system 800 includes the apparatus 600 shown in FIG. 6 and the apparatus 700 shown in FIG. 7.

The apparatus 400 shown in FIG. 4 or the apparatus 600 shown in FIG. 6 may be a radio unit 801, and the apparatus 500 shown in FIG. 5 or the apparatus 700 shown in FIG. 7 may be a baseband unit 802.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should be further understood that, although the following descriptions use terms such as "first" and "second" to describe various elements, these elements should not be limited by the terms. These terms are simply used to distinguish one element from another. For example, a first image may be referred to as a second image, and similarly, a second image may be referred to as a first image without departing from the scope of the various examples. Both the first image and the second image may be images, and in some cases, may be separate and different images.

It should be further understood that, in embodiments of this application, sequence numbers of the processes do not mean execution sequences. The execution sequences of the processes should be determined based on functions and internal logic of the processes, and should not be construed as any limitation on implementation processes of embodiments of this application.

The foregoing descriptions are only optional embodiments of this application, but are not intended to limit this application. Any modification, equivalent replacement, or improvement made within the principle of this application should fall within the protection scope of this application.

## Claims

1. A communication method, wherein the method comprises:
sending, by a radio unit, a service idleness request to a baseband unit; and
receiving, by the radio unit, a service idleness allow response sent by the baseband unit, wherein the service idleness allow response indicates that a first resource is an idle resource.

2. The method according to claim 1, wherein the method further comprises:
executing, by the radio unit, a first component processing task using the first resource, wherein the first component processing task comprises one or more of the following: a task for calibrating a radio frequency channel of the radio unit, a task for calibrating an antenna of the radio unit, or a task for detecting a component in the radio unit.

3. The method according to claim 1 or 2, wherein the first resource comprises a first radio frequency channel, a first time resource, and a first frequency resource, and the first radio frequency channel is a radio frequency channel on the radio unit.

4. The method according to claim 3, wherein the service idleness allow response comprises first information, and the first information indicates the first resource.

5. The method according to claim 4, wherein the first information comprises one or more of the following information:
a channel identifier of the first radio frequency channel, a start time of the first time resource, duration of the first time resource, a start location of the first frequency resource, or a resource size of the first frequency resource; or
the first information comprises one or more of the following information:
a channel identifier of the first radio frequency channel, a start time of the first time resource, duration of the first time resource, or an identifier of at least one frequency in the first frequency resource.

6. The method according to any one of claims 1 to 5, wherein the service idleness request comprises second information and/or a task identifier of the first component processing task, the second information indicates a second resource, and the first component processing task comprises one or more of the following: the task for calibrating the radio frequency channel of the radio unit, the task for calibrating the antenna of the radio unit, or the task for detecting the component in the radio unit.

7. The method according to claim 6, wherein the second resource comprises the first radio frequency channel, a second time resource, and a second frequency resource, and the first radio frequency channel is a radio frequency channel on the radio unit.

8. The method according to claim 7, wherein the second information comprises one or more of the following information:
the channel identifier of the first radio frequency channel, a start time of the second time resource, duration of the second time resource, a start location of the second frequency resource, or a resource size of the second frequency resource; or
the second information comprises one or more of the following information:
the channel identifier of the first radio frequency channel, a start time of the second time resource, duration of the second time resource, or an identifier of at least one frequency in the second frequency resource.

9. The method according to any one of claims 6 to 8, wherein before the sending, by a radio unit, a service idleness request to a baseband unit, the method further comprises:
determining, by the radio unit, the second information based on the first component processing task.

10. The method according to any one of claims 6 to 9, wherein before the sending, by a radio unit, a service idleness request to a baseband unit, the method further comprises:
sending, by the radio unit, the task identifier of the first component processing task and the second information to the baseband unit.

11. A communication method, wherein the method comprises:
receiving, by a baseband unit, a service idleness request sent by a radio unit;
determining, by the baseband unit, a first resource based on the service idleness request; and
sending, by the baseband unit, a service idleness allow response to the radio unit, wherein the service idleness allow response indicates that the first resource is an idle resource.

12. The method according to claim 11, wherein the first resource comprises a first radio frequency channel, a first time resource, and a first frequency resource, and the first radio frequency channel is a radio frequency channel on the radio unit.

13. The method according to claim 12, wherein the service idleness allow response comprises first information, and the first information indicates the first resource.

14. The method according to claim 13, wherein the first information comprises one or more of the following information:
a channel identifier of the first radio frequency channel, a start time of the first time resource, duration of the first time resource, a start location of the first frequency resource, or a resource size of the first frequency resource; or
the first information comprises one or more of the following information:
a channel identifier of the first radio frequency channel, a start time of the first time resource, duration of the first time resource, or an identifier of at least one frequency in the first frequency resource.

15. The method according to any one of claims 12 to 14, wherein the method further comprises:
stopping, by the baseband unit in the period of time corresponding to the first time resource, transmitting a first service using the first frequency resource, wherein the first service is a service of the radio unit.

16. The method according to any one of claims 11 to 15, wherein the service idleness request comprises second information and/or a task identifier of a first component processing task, the second information indicates a second resource, and the first component processing task comprises one or more of the following: a task for calibrating a radio frequency channel of the radio unit, a task for calibrating an antenna of the radio unit, or a task for detecting a component in the radio unit.

17. The method according to claim 16, wherein the second resource comprises the first radio frequency channel, a second time resource, and a second frequency resource, and the first radio frequency channel is a radio frequency channel on the radio unit.

18. The method according to claim 17, wherein the second information comprises one or more of the following information:
the channel identifier of the first radio frequency channel, a start time of the second time resource, duration of the second time resource, a start location of the second frequency resource, or a resource size of the second frequency resource; or
the second information comprises one or more of the following information:
the channel identifier of the first radio frequency channel, a start time of the second time resource, duration of the second time resource, or an identifier of at least one frequency in the second frequency resource.

19. The method according to any one of claims 16 to 18, wherein the method further comprises:
determining, by the baseband unit based on service information of the first service, whether transmission of the first service can be suspended, wherein the first service is a service of the radio unit; and
the determining, by the baseband unit, a first resource based on the service idleness request comprises:
when determining that transmission of the first service can be suspended, determining, by the baseband unit, the first resource based on the service idleness request.

20. The method according to any one of claims 16 to 19, wherein the service idleness request comprises the second information; and
the determining, by the baseband unit, a first resource based on the service idleness request comprises:
determining, by the baseband unit based on the second information, the second resource as the first resource; or
allocating, by the baseband unit based on the second information, a resource different from the second resource as the first resource.

21. The method according to any one of claims 16 to 19, wherein the service idleness request comprises the task identifier of the first component processing task; and
the determining, by the baseband unit, a first resource based on the service idleness request comprises:
obtaining, by the baseband unit, corresponding information from a correspondence between the task identifier and the second information based on the task identifier of the first component processing task; and
determining, by the baseband unit, the first resource based on the obtained information.

22. The method according to claim 21, wherein before the receiving, by a baseband unit, a service idleness request sent by a radio unit, the method further comprises:
receiving, by the baseband unit, the task identifier of the first component processing task and the second information that are sent by the radio unit; and
storing, by the baseband unit, the correspondence between the task identifier of the first component processing task and the second information.

23. A communication apparatus, comprising at least one processor, wherein the at least one processor is configured to: be coupled to a memory, and read and execute instructions in the memory, to implement the method according to any one of claims 1 to 22.

24. A communication system, comprising a radio unit and a baseband unit, wherein the radio unit is configured to perform the method according to any one of claims 1 to 10, and the baseband unit is configured to perform the method according to any one of claims 11 to 22.

25. A computer-readable storage medium, wherein the computer-readable storage medium stores a computer program, and when the computer program is executed by a computer, the method according to any one of claims 1 to 22 is implemented.

26. A computer program product comprising instructions, wherein when the instructions are currently executed on a computer, the method according to any one of claims 1 to 22 is performed.
